# EUROPEAN PATENT SPECIFICATION

(11) **EP 2 316 798 B1**
(45) Date of publication and mention of the grant of the patent: **02.10.2013**
(21) Application number: 10189443.4
(22) Date of filing: 29.10.2010
(51) Int. Cl.: C03B 37/012

(54) **Formation of microstructured fiber preforms using porous glass deposition**
Bildung von mikrostrukturierten Faservorformen mittels Abscheidung von porösem Glas
Formation de préformes de fibres microstructurées utilisant un dépôt de verre poreux

(30) Priority: 30.10.2009 US 589951
(43) Date of publication of application: 04.05.2011
(73) Proprietor: OFS Fitel, LLC, Norcross, GA 30071 (US)
(72) Inventor: Fleming, James, Westfield, NJ 07090 (US); Zydzik, George, Columbia, NJ 07832 (US)
(74) Representative: Zimmermann, Tankred Klaus

(56) References cited:
- WO-A1-2010/029147
- US-A- 4 642 129
- US-A1- 2007 104 437

## Description

### Technical Field

The present invention relates to the formation of a microstructured fiber preform and, more particularly, forming a microstructured fiber preform by applying plasma fusion to a layer of powder deposited onto an outer surface of an optical fiber substrate under certain conditions that prevent the deposited layer from completely densifying, thereby yielding the formation of bubbles within the layer to create a microstructured arrangement.

### Background of the Invention

There are numerous potential applications for microstructured optical fiber, also known as "holey fibers". The inclusion of air-filled (more generally, gas-filled) holes in solid glass lowers the effective index of the glass and/or creates band gaps affecting light propagation. Therefore, these "holey" glass materials can function as a cladding of an optical fiber. There are several known methods of making such a fiber. Most rely on systematic assembly and draw of stacked rods and tubes, or casting sol-gel bodies having holes of the desired geometry. These methods work well, and are particularly useful where precise orientation of the holes is important - such as in the case of photonic crystal fiber.

However, there are certain applications that do not require such precision in the air/gas hole orientation, yet may benefit from the index modifications attributed to the inclusion of such structures in an optical fiber, particularly in the cladding region of the fiber. Thus, a flexible, low cost method for introducing microstructures in these fibers is desired.

One current method of creating random arrays of holes in optical fiber includes injecting gas into a fluid during fiber draw. The gas forms bubbles that are thereafter drawn into long, microscopic holes. The gas is generally created by vaporized nitride or carbide compounds. Another current method includes creating a microstructured fiber by depositing glass soot and then consolidating the soot under conditions which are effective to trap a portion of the gasses in the glass, thereby creating a non-periodic array of holes which may then form a microstructured cladding region of a drawn fiber. Yet another current method depicts pouring a bubble creating" slurry containing amorphous silica particles into an annular space between an external cladding layer and a concentric core rod, gelling the slurry to produce a material which forms bubbles by means of a subsequent thermal treatment.

Drawbacks associated with such methods include such non-controllability of the location and size of the holes within the cladding layer that the effective index of the cladding layer may become too variable as a function of preform or fiber position.

US 2007/104437 A1 describes a method of making a microstructured optical fiber using a chemical vapor deposition (CVD) technique of depositing soot which is thereafter consolidated in a gaseous atmosphere to as to trap a portion of the gas within the soot, creating holes in the final structure.

US 4,642,129 A describes a method of forming a porous glass preform by generating glass particles from a vapor phase and applying the particles onto a substrate.

### Summary of the Invention

It is an object of the present invention to provide an improved method of making a microstructured optical fiber preform.

This object is achieved by a method as defined in claim 1.

The needs remaining in the above and other methods are addressed by the present invention, which relates to the formation of a microstructured fiber preform and, more particularly, to the use of plasma fusion of a silica powder layer deposited onto an outer surface of an optical fiber substrate, such as a bait rod, a preform core rod, a tube, and the like. The powder layer is deposited under conditions that prevent the deposited layer from completely densifying, thereby yielding the formation of bubbles within the deposited layer. As used herein, the term "bubble" is defined as air or gas encapsulated within the surrounding glass to form a partially-densified layer. By proper selection of the particle size distribution of the powder and the processing conditions, the bubbles are substantially uniform in size and spacing within the layer.

In accordance with the present invention, the temperature of the plasma fusion process is kept below that associated with complete densification of the deposited powder, which allows for molten powder particles to fuse together on the outer substrate surface to create bubbles of a narrow diameter range. Indeed, the control of the plasma fusion process temperature allows for fabrication of bubbles that will evolve into gas lines of preferred sizes during a fiber draw process, where the phrase "gas line", as used hereinafter, represents elongation of a bubble during the fiber draw process. The line may comprise an air line or gas line, depending on the parameters of the process, but will be referred to as a "gas line" for the sake of expediency. Further, the size of the bubbles can be controlled by a combination of parameters, including (but not limited to) powder composition, particle size within the powder, plasma conditions, preform substrate size, plasma gas composition and plasma traverse speed over the substrate. Moreover, the size and shape of the gas lines can be controlled in accordance with the present invention by the properties of the bubbles and the conditions applied to the preform during fiber draw (the latter including, for example, draw temperature, draw speed, and temperature distribution along the preform and drawn fiber).

One advantage of this method of the present invention is that the bubbles can be formed at plasma fusion process temperatures within the range of conventional fiber draw temperatures. By keeping the plasma fusion process temperature in this range while controlling other parameters, such as the powder composition, particle size, and the like, the bubbles are prevented from collapsing, expanding or joining with other bubbles later during the fiber drawing process. However, to prevent excessive bubble growth during fiber draw, the resulting fiber should not be drawn above a temperature that substantially exceeds the plasma fusion process temperature.

In accordance with the present invention, the bubbles within the deposited layer can be converted into extended gas lines during fiber draw while maintaining substantially the same ratio (with respect to the drawn fiber) as present in the original preform (i.e., "gas line diameter:fiber diameter" is substantially the same as "bubble diameter:preform diameter"). The gas lines lower the effective refractive index of the silica glass region in which they reside. For certain choices of preform dimensions, bubble size and draw conditions, a fiber can be made where gas lines of a desired diameter are continuous for several hundred meters - generally associated with utilizing larger diameter bubbles. Alternatively, smaller bubbles within the deposited layer will convert into shorter gas lines that may be advantageous in affecting the optical properties of the fiber. For example, shorter gas lines can increase optical scattering in the glass and may be useful in instances where optical attenuation is desirable. These shorter gas lines can be formed by manipulation of the powder deposition process to create smaller bubbles that do not expand or contract substantially during the draw process, or be formed by controlling the draw conditions to facilitate sufficient collapse of larger bubbles, resulting in the desired gas line properties in the final drawn fiber.

Other and further advantages and details of the method of the present invention will become apparent during the course of the following discussion and by reference to the following drawings.

### Brief Description of the Drawings

Referring now to the drawings,

FIG. 1 illustrates an exemplary apparatus for creating a microstructured optical fiber preform in accordance with the present invention;

FIG. 2 depicts an exemplary evolution of deposited powder particles into a partially densified layer including a plurality of bubbles trapped therein;

FIG. 3 is a graph of particle size distribution (normalized) as a function of particle size, as associated with the creation of essentially uniform bubble size;

FIG. 4 is a photograph of an exemplary microstructured optical fiber preform containing plasma-generated gas bubbles in accordance with the present invention;

FIG. 5 is a photograph of a drawn section of fiber, illustrating the transition of the gas bubbles into gas lines in accordance with the present invention;

FIG. 6 is a cross-sectional view of an exemplary 125 µm optical fiber including lines drawn from bubbles in accordance with the present invention, where in this case the draw conditions are controlled to maintain the ratio of the bubbles during draw; and

FIG. 7 is a cross-sectional view of another 125 µm optical fiber of the present invention, in this case subjected to a slower draw condition at a temperature greater than that applied to the fiber of FIG. 6, where a number of bubbles grow and join together to form larger and fewer gas lines.

### Detailed Description

It has been found that a porous material can be deposited onto an optical fiber preform substrate to form a layer containing bubbles as part of the preform structure. By virtue of incorporating gas bubbles into a layer in the preform structure (for example, as an annular layer in the cladding structure), the effective refractive index of this layer can easily be modified, which is a useful tool in controlling the index profile of a fiber drawn from the preform. In accordance with the present invention, a powder having particles of a controlled size (for example, silica powder) is deposited onto an outer surface of a preform substrate through a plasma process. By choosing appropriate deposition conditions such as, but not limited to: (1) rotational and translational movements of the preform substrate with respect to the plasma source; (2) maintaining a temperature at a value near the fiber draw temperature; and (3) composition of the deposited powder and powder particle size, a desired size and density of the bubbles is effectively controlled. As mentioned above, the term "bubble" is defined as air or gas encapsulated within the layer being formed.

A significant feature of the preform fabrication process of the present invention is the narrow range of bubble size present in the deposited material. This feature allows the possibility of creating bubbles at a plasma fusion process temperature within the same range as that used during a conventional fiber draw process. By using a plasma fusion process temperature similar to a conventional fiber draw temperature, the bubbles will not enlarge, expand, join together or collapse during draw. Alternatively, the bubbles can be collapsed or expanded, if desired, through adjusting these two temperatures relative to one another (i.e., the plasma fusion process temperature and the fiber draw process temperature). One advantage of the fabrication process of the present invention is the ability to combine this particular bubble-creating method with conventional overcladding approaches to place the bubble-containing layer at any desired radial distance from the center of a preform substrate core region. Indeed, the process of the present invention may be used multiple times, and/or use different powder compositions/particle size to create separate overcladding layers, where each cladding layer exhibits a different refractive index by virtue of a difference in the bubble size/density between the layers.

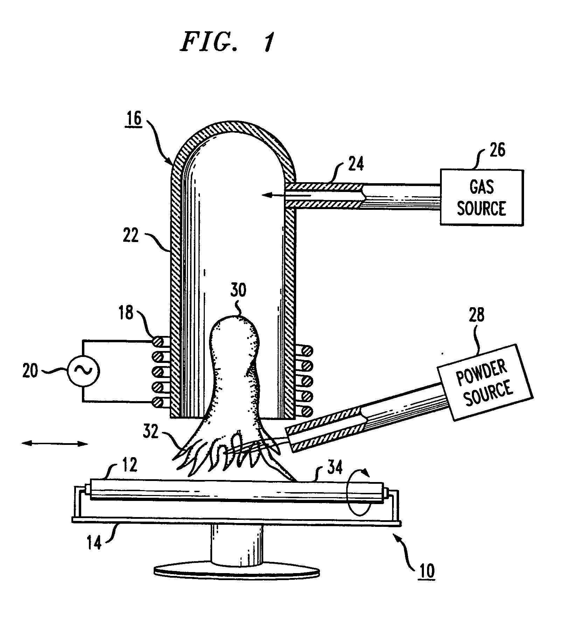

FIG. 1 shows an outline of an exemplary apparatus for creating a bubble-containing layer along an outer surface of an optical fiber preform substrate, where the substrate typically comprises a cylindrical rod or tube. A glass-working lathe 10 is mounted in a vented hood (not shown), and rotates a preform substrate 12 about a horizontal axis. In this embodiment, glass-working lathe 10 is mounted on a pedestal 14. A plasma torch 16 is suspended vertically over substrate 12 and is employed in conjunction with an RF coil 18 and associated RF generator 20 to create a plasma discharge. In this exemplary apparatus, plasma torch 16 comprises a fused silica mantle 22 connected by a tube 24 to a gas source 26 which feeds the gas desired to create a plasma discharge 30 in mantle 22. An induced field within coil 18 from RF generator 20 operating around 2-5 MHz has been found sufficient to excite the plasma. Because of the low ionization potential of argon, this is a preferable gas to be used as an initial source 26; however, other suitable gases may be used. In an exemplary arrangement, the plasma is first initiated with argon gas and is thereafter gradually shifted to a hotter oxygen or an oxygen-helium mixture from gas source 26 for deposition of the powder. A gas control system with the ability to follow computer command is preferably used in connection with a mixing manifold (not shown) for delivery to plasma torch 16.

In accordance with the present invention, a powder from a separate powder source 28 is injected into the tail region 32 of plasma discharge 30, where it melts and is deposited on outer surface 34 of substrate 12. In accordance with the present invention, the powder may comprise particles of glass or glass-forming silica material. Exemplary powders include a synthetic amorphous silica powder and a crystalline silica powder. A powder particle size in a range of, for example, approximately 15 5 µm to approximately 500 µm can be used.

Powder source 28 may comprise, for example, a vibratory powder feeder that continuously introduces a regulated quantity of a precursor powder into a stream of an inert gas, such as nitrogen, which carries the particles to plasma torch 16. The powder-gas stream is thus directed into tail region 32 of plasma discharge 30 to facilitate the fusion of the powder particles together onto rotating outer surface 34 of substrate 12. It is an important aspect of the present invention that the temperature of the plasma fusion process is controlled such that the powder particles melt in the plasma flame and fuse together, yet do not completely densify upon contact with outer surface 34 of substrate 12. That is, the plasma fusion process temperature must be maintained at a level lower than that associated with complete densification of the particular powder composition.

Although not specifically illustrated in FIG. 1, RF excitation oscillator 20, coil 18 and plasma torch 16 move along substrate 12 (indicated by the double-ended arrow) during deposition by means of, for example, a motor-driven support carriage (not shown). The speed of the traverse can be used to reduce the time that the deposited powder is subjected to heating and melting. A separate motor (not shown) may be used to control the vertical position of plasma torch 16 relative to substrate 12. The position of plasma torch 16 with respect to substrate 12 is also important for temperature control. As briefly mentioned above, the deposition rate and degree of powder melting depends strongly on the heat output from plasma torch 16. For example, a system limited to about 20 kW electrical power at the RF oscillator 20 can deposit silica powder at rates approaching 15 gm/min with substrate diameters around 30 mm. Scaling up both rate and diameter demands greatly increased power, since more material must be heated to the melting point - while radiative, convective and conductive heat losses increase with increasing substrate diameter. For example, a 40 mm diameter substrate could be made with the 20 kW system, but only at deposition rates below 10 grams per minute. The deposition rate is also increased by the use of a broad plasma fireball. Many plasma torch designs are acceptable for this application.

The efficiency with which the power delivered by source 28 is collected on substrate 12 has been found to be about 90% in experiments using this method of delivery to the substrate surface. However, random perturbations with regard to deposition in local regions of the preform could cause unacceptable diameter variations. Diameter control can be maintained through continuous monitoring of the plasma diameter and feedback to the deposition apparatus to control motion. Note that in the above discussion, the substrate 12 may take the form of a bait rod, a preform core rod, a tube, or any other body onto which a bubble-containing glass layer is being deposited.

As mentioned above, the present invention focuses on an intermediate state where the powder is melted, but only partially fused and partially densified. Additionally, to achieve the desired bubble size in the deposited layer, the particle size and particle size distribution are important factors. A unique quality of a microstructured fiber preform formed in accordance with the present invention is that the bubbles are created with a narrow range of diameters, allowing subsequent growth or collapse to be controlled by the relative process temperatures of bubble formation and fiber draw. In particular, if bubble formation occurs at substantially the same temperature as later used to draw the fiber, the pressure inside the bubbles will not substantially change and the drawn gas lines will exhibit essentially the same ratio (with respect to the drawn fiber) as the original bubbles exhibited with respect to the original preform. Alternatively, if the temperature during bubble formation is substantially greater (lower) than that used to draw the fiber, the bubbles will partially contract (expand).

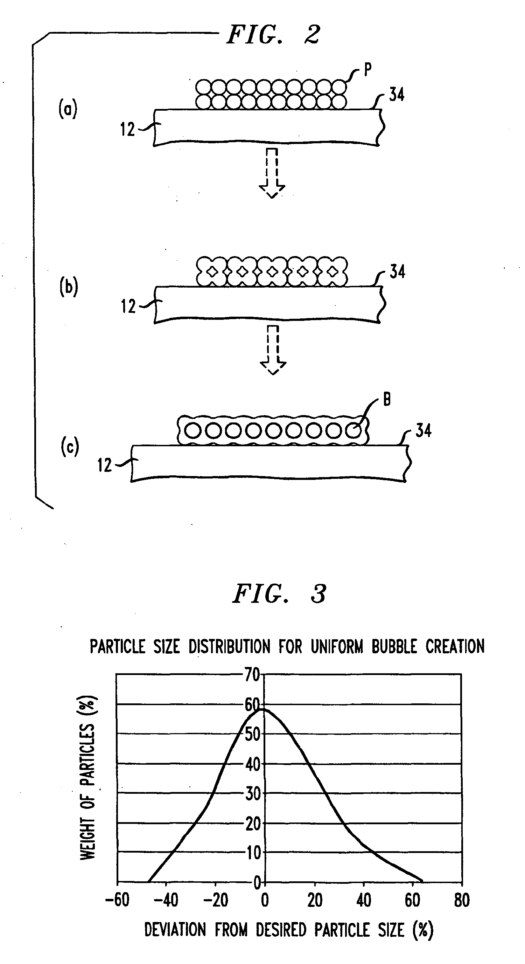

FIG. 2 depicts the evolution of deposited power particles into a partially-densified layer having gas bubbles trapped therein, in accordance with the present invention. It is to be understood that the illustrations of FIG. 2 are merely for the purpose of explanation and representations of an exemplary process. FIG. 2(a) shows a plurality of separate and distinct powder particles P which are first deposited on outer surface 34 of substrate 12. Following the deposition, the particles begin to densify and fuse together, as shown in FIG. 2(b). The rate at which this process occurs is obviously a function of the temperature at substrate 12. The densification process continues, as shown in FIG. 2(c), until the particles have partially densified so as to create discernible gas bubbles B.

As mentioned above, one parameter that may be utilized to control the size of the created bubbles is the size of the original powder particles introduced into the plasma fusion process. FIG. 3 is a graph showing the particle size distribution, normalized for the choice of the desired particle size. This particular distribution of initial power particle size was found to be effective in producing substantially uniform bubbles in the plasma fusion process of the present invention.

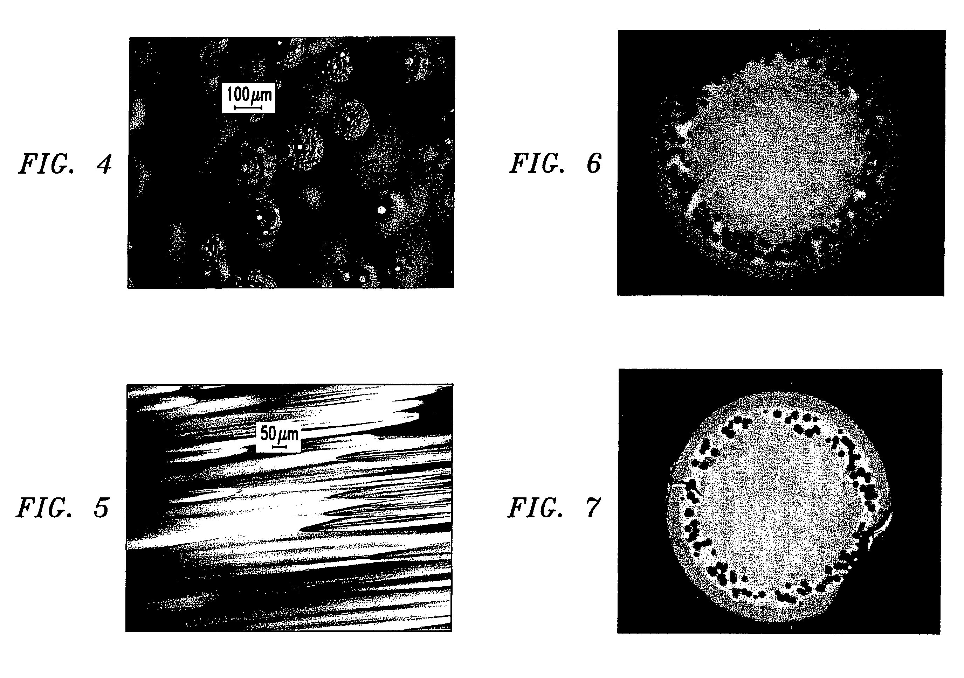

FIG. 4 is a photograph of an exemplary bubble-containing overcladding region formed by the plasma process of the present invention. As described above, the size and density of the bubbles are controlled by factors such as the plasma power level, the plasma-to-substrate separation and the plasma gas flow rates, as well as the composition of the powder itself (and size of the particles contained therein) and the gas composition. It is well known that gases can dissolve into or diffuse through glass at different rates depending on the chemistry of the glass and the gas composition. This effect can be used to alter the bubble and gas line size during processing. Generally speaking, the size of a bubble can vary from a few microns to a millimeter, depending on the requirements for the drawn fiber itself (e.g., cladding layer reflective index, degree of optical scattering, etc.).

During fiber draw, the bubbles within the preform elongate into gas lines, perhaps extending several hundreds of meters. As discussed above, the "gas" lines may comprise air lines, argon gas lines, or lines of any other gaseous composition suitable in the fabrication of optical fibers. FIG. 5 is a photograph of a section of drawn fiber, showing the formation of the gas lines generated from the original bubbles. It has also been found that the draw conditions can be controlled to dictate the parameters of the gas lines. Under specific draw conditions, for example, the ratio of the bubbles' diameter to the preform diameter can be maintained during draw, resulting in a similar ratio between the gas line diameter and the drawn fiber diameter. FIG. 6 is a cross-sectional view of an exemplary optical fiber drawn down to an outer diameter of 125 µm using a draw process commonly employed for silica-based preforms. As shown, the optical fiber includes a cladding layer containing gas lines formed from the original bubbles in accordance with the present invention. It is to be noted that the particle size distribution mentioned above in association with FIG. 3 fits the particle size distribution of the powder used in the creation of the fiber shown in FIG. 6

On the other hand, when using a slower, higher temperature draw rate, it has been found that the bubbles will grow and merge, forming fewer and larger gas lines with these gas lines having a larger diameter than would otherwise be consistent with the draw feature ratio. FIG. 7 is a cross-sectional view of another optical fiber with an outer diameter of 125 µm, in this case drawn under a reduced rate condition. As evident from this photograph, the number of gas lines is reduced from the illustration of FIG. 7, with the diameters of the gas lines being larger.

## Claims

1. A method of making a microstructured optical fiber preform, the method comprising the steps of:
a) providing a substrate (12) of optical material;
b) creating a plasma discharge (30); and
c) traversing the plasma discharge (30) across a desired extent of a surface (34) of the substrate (12);
**characterized by**
d) feeding a powder (P) into the plasma discharge (30) such that the powder (P) is deposited onto the substrate surface (34); and
e) partially densifying the deposited powder (P) to form a layer on the substrate surface (34),
wherein the layer comprises a plurality of bubbles.

2. The method as defined in claim 1 wherein the substrate (12) is selected from the group consisting of a bait rod, a preform core and a tube.

3. The method as defined in claim 1 wherein the substrate (12) is made of a silica material.

4. The method as defined in claim 1 wherein the powder (P) comprises a particle size selected to yield a specifically-sized bubble in the deposited layer.

5. The method as defined in claim 1, wherein the step of partially densifying the deposited powder (P) occurs by maintaining a plasma fusion process temperature less than that associated with complete densification of the deposited powder (P).

6. The method as defined in claim 1 wherein a size of each bubble created in the layer formed on the surface (34) of the substrate (12) is controlled by a power level of the plasma discharge (30), a flow rate of the plasma discharge (30), and the separation between the plasma discharge (30) and the powder-covered substrate surface (34).

7. The method as defined in claim 1, further comprising repeating steps c) - e) to create a plurality of bubble-containing layers, where each layer is created over a previous bubble-containing layer.

8. The method as defined in claim 1, further comprising the step of:
f) drawing down the preform into an optical fiber of a defined outer diameter, wherein the plurality of bubbles transform into gas lines during the drawing down process.

9. The method as defined in claim 8 wherein step f) further comprises the step of controlling a draw rate to maintain a ratio of gas line diameter with respect to a drawn fiber diameter to be substantially the same as the original bubble diameter with respect to the preform diameter.

10. The method as defined in claim 8 wherein step f) further comprises the step of implementing a higher effective draw temperature so as to modify a bubble cross section from that initially created in step e).

## Patentansprüche

1. Ein Verfahren zum Herstellen einer Mikrostrukturierte-Optische-Faser-Vorform, wobei das Verfahren folgende Schritte aufweist:
a) Bereitstellen eines Substrats (12) aus einem optischen Material;
b) Erzeugen einer Plasmaentladung (30); und
c) Schwenken der Plasmaentladung (30) über ein erwünschtes Ausmaß einer Oberfläche (34) des Substrats (12);
**gekennzeichnet durch**
d) Zuführen eines Pulvers (P) in die Plasmaentladung (30), sodass das Pulver (P) auf die Substratoberfläche (34) aufgebracht wird; und
e) teilweise Verdichten des aufgebrachten Pulvers (P), um eine Schicht auf der Substratoberfläche (34) zu erzeugen,
wobei die Schicht eine Mehrzahl von Blasen aufweist.

2. Das Verfahren gemäß Anspruch 1, bei dem das Substrat (12) aus der Gruppe ausgewählt wird, die einen Köderstab, einen Vorformkern und eine Röhre umfasst.

3. Das Verfahren gemäß Anspruch 1, bei dem das Substrat (12) aus einem Silika-Material hergestellt ist.

4. Das Verfahren gemäß Anspruch 1, bei dem das Pulver (P) eine Teilchengröße aufweist, die ausgewählt ist, um eine Blase mit spezifischer Größe in der aufgebrachten Schicht zu ergeben.

5. Das Verfahren gemäß Anspruch 1, bei dem der Schritt des teilweise Verdichtens des aufgebrachten Pulvers (P) durch Aufrechterhalten einer Plasmafusionsprozesstemperatur auftritt, die kleiner ist als diejenige, die einer vollständigen Verdichtung des aufgebrachten Pulvers (P) zugeordnet ist.

6. Das Verfahren gemäß Anspruch 1, bei dem eine Größe jeder Blase, die in der Schicht erzeugt wird, die auf der Oberfläche (34) des Substrats (12) gebildet wird, durch einen Leistungspegel der Plasmaentladung (30), eine Flussrate der Plasmaentladung (30) und die Trennung zwischen der Plasmaentladung (30) und der mit Pulver beschichteten Substratoberfläche (34) gesteuert wird.

7. Das Verfahren gemäß Anspruch 1, das ferner ein Wiederholen der Schritte c) bis e) aufweist, um eine Mehrzahl blasenhaltiger Schichten zu erzeugen, wobei jede Schicht über einer vorherigen blasenhaltigen Schicht erzeugt wird.

8. Das Verfahren gemäß Anspruch 1, das ferner folgenden Schritt aufweist:
f) Herunterziehen der Vorform in eine optische Faser mit einem definierten Außendurchmesser, wobei sich die Mehrzahl von Blasen während des Herunterziehvorgangs in Gasleitungen verwandelt.

9. Das Verfahren gemäß Anspruch 8, bei dem Schritt f) ferner den Schritt eines Steuerns einer Ziehrate aufweist, um ein Verhältnis des Gasleitungsdurchmessers in Bezug auf den Durchmesser einer gezogenen Faser so aufrechtzuerhalten, dass es im Wesentlichen gleich dem Durchmesser der ursprünglichen Blase in Bezug auf den Vorformdurchmesser ist.

10. Das Verfahren gemäß Anspruch 8, bei dem Schritt f) ferner den Schritt eines Implementierens einer höheren effektiven Ziehtemperatur aufweist, um so einen Blasenquerschnitt gegenüber demjenigen zu modifizieren, der zu Beginn bei Schritt e) erzeugt wurde.

## Revendications

1. Procédé pour réaliser une préforme de fibre optique micro-structurée, le procédé comprenant les étapes consistant à:
a) préparer un substrat (12) en matériau optique;
b) créer une décharge de plasma (30); et
c) faire passer la décharge de plasma (30) sur une étendue désirée d'une surface (34) du substrat (12);
**caractérisé par** le fait
d) d'alimenter une poudre (P) dans la décharge de plasma (30), de sorte que la poudre (P) soit déposée sur la surface de substrat (34); et
e) densifier partiellement la poudre déposée (P), pour former une couche sur la surface de substrat (34),
dans lequel la couche comprend une pluralité de bulles.

2. Procédé selon la revendication 1, dans lequel le substrat (12) est sélectionné parmi le groupe composé d'une tige d'amorce, d'un noyau de préforme et d'un tube.

3. Procédé selon la revendication 1, dans lequel le substrat (12) est réalisé en matériau à base de silice.

4. Procédé selon la revendication 1, dans lequel la poudre (P) comprend une grosseur de particule choisie pour produire une bulle de grosseur spécifique dans la couche déposée.

5. Procédé selon la revendication 1, dans lequel l'étape de densification partielle de la poudre déposée (P) s'effectue en maintenant une température de processus de fusion de plasma inférieure à celle associée à une densification complète de la poudre déposée (P).

6. Procédé selon la revendication 1, dans lequel une grosseur de chaque bulle créée dans la couche formée sur la surface (34) du substrat (12) est contrôlée par un niveau d'énergie de la décharge de plasma (30), un débit de la décharge de plasma (30), et la séparation entre la décharge de plasma (30) et la surface de substrat recouverte de poudre (34).

7. Procédé selon la revendication 1, comprenant par ailleurs le fait de répéter les étapes c) à e), pour créer une pluralité de couches contenant des bulles, où chaque couche est créée sur une couche contenant des bulles précédente.

8. Procédé selon la revendication 1, comprenant par ailleurs l'étape consistant à:
f) étirer la préforme, pour obtenir une fibre optique d'un diamètre extérieur défini, où la pluralité de bulles se transforment en des lignes de gaz pendant le processus d'étirage.

9. Procédé selon la revendication 8, dans lequel l'étape f) comprend par ailleurs l'étape consistant à contrôler une vitesse d'étirage, pour maintenir un rapport entre le diamètre des lignes de gaz et un diamètre de fibre étirée sensiblement identique à celui entre le diamètre de bulle original et le diamètre de préforme.

10. Procédé selon la revendication 8, dans lequel l'étape f) comprend par ailleurs l'étape consistant à mettre en oeuvre une température d'étirage effective supérieure, de manière à modifier une section de bulle par rapport à celle créée initialement à l'étape e).
